# EUROPÄISCHE PATENTSCHRIFT

(11) **EP 2 485 582 B1**
(45) Veröffentlichungstag und Bekanntmachung des Hinweises auf die Patenterteilung: **23.10.2013**
(21) Anmeldenummer: 10779675.7
(22) Anmeldetag: 24.09.2010
(51) Int. Cl.: A01K 61/00, A01K 69/10

(54) **TRANSPORTIERBARE VORRICHTUNG ZUR ANSIEDLUNG UND ERNTUNG VON WIRBELLOSEN TIEREN UND ANWENDUNG DAVON**
TRANSPORTABLE DEVICE FOR ESTABLISHING A COLONY OF INVERTEBRATES AND FOR HARVESTING SAME, AND USE OF SAID DEVICE
DISPOSITIF TRANSPORTABLE POUR LA COLONISATION ET LA RÉCOLTE D'INVERTÉBRÉS ET SON UTILISATION

(30) Priorität: 07.10.2009 DE 102009049083
(43) Veröffentlichungstag der Anmeldung: 15.08.2012
(73) Patentinhaber: Stiftung Alfred-Wegener-Institut für Polar- und Meeresforschung, 27570 Bremerhaven (DE)
(72) Erfinder: KRONE, Roland, 28209 Bremen (DE); KRÄMER, Philipp, 26121 Oldenburg (DE)
(86) Internationale Anmeldenummer: PCT/DE2010/001146
(87) Internationale Veröffentlichungsnummer: WO 2011/042003

(56) Entgegenhaltungen:
- DE-C1- 10 161 174
- DE-U1- 20 310 089
- US-A- 2 821 047
- US-A- 3 950 885

## Beschreibung

Die Erfindung bezieht sich auf eine transportierbare Vorrichtung zur Ansiedlung und Erntung von wirbellosen Tieren in der Nähe eines Gewässerbodens mit zumindest zwei viereckigen Rahmen, die Fangflächen aufweisen und mittels eines zwischen gegenüberliegenden inneren Querseiten der Rahmen angeordneten Zentralscharniers in dessen einseitiger Klapprichtung in unterschiedlichen Öffnungswinkeln der Vorrichtung positionierbar sind und auf eine Anwendung dieser Vorrichtung.

Das Umfeld strukturierter Bodensubstrate (Riffe, Stein- und Geröllfelder) in Gewässern sowie künstlich geschaffener Unterwasserstrukturen (Plattformen, Wracks, künstliche Riffe) ist ein Ballungspunkt für verschiedenste kommerziell nutzbare Krebsarten. Speziell im Offshorebereich werden diese Gebiete oftmals kaum bewirtschaftet. Herkömmliche Grund-Netze lassen sich durch die Gefahr des Verhakens nur unter hohem Risiko einsetzen. Beköderte Fallen hingegen sind auf Grund ihrer geringen Größe und des hohen Aufwands pro gefangenen Tier für den Hochseeeinsatz wenig lukrativ. Großkrebse an strukturierten Hartsubstraten oder künstlichen Bauwerken werden bisher durch Reusensysteme oder beköderte Fallensysteme abgefangen. Diese in der Regel für den Küsteneinsatz konstruierten Systeme werden auch teilweise im Offshorebereich eingesetzt. Künstliche Riffe zur Ansiedelung bestimmter Hartbodenfauna wurden mit verschiedenen Ansätzen entwickelt.

### STAND DER TECHNIK

Aus der US 4.736.708 ist eine transportierbare Vorrichtung zur Ansiedlung und Erntung von Krebsen bekannt, die aus einer Reihe von tonnenförmigen Einzelelementen besteht, die mit einer Leine zwischen zwei Bodenankern verbunden sind. Eine derartige Vorrichtung ist relativ sperrig und damit nur aufwändig auszubringen und wieder einzuholen.

Aus der US 4.982.525 ist eine zusammenlegbare Hummerfalle bekannt, die aus einem dreieckigen Bodengitter und drei dreieckigen Seitengittern besteht. Die Seitengitter sind mit dem Bodengitter über Scharniere verbunden. Der Transport der ungenutzten Hummerfalle erfolgt im zusammengelegten Zustand, die Erntung erfolgt im aufgestellten Zustand in Form eines Tetraeders, wobei sich in den Seitengittern netzbewehrte Durchgangsöffnungen für die Hummer befinden. Ausbringung und Bergung der Hummerfalle erfolgen ebenfalls im aufgestellten Zustand. Die Hummerfalle ist nur für eine kurzzeitige Ausbringung gedacht und eignet sich nicht als Habitat, da die Krebse sofort gefangen werden.

Aus der US Des. 401.994 ist ebenfalls eine zusammenlegbare Hummerfalle bekannt, bei der ein Gittergewölbe von seitlichen Gitterklappen verschlossen werden kann. Das Gittergewölbe besteht aus einer Gitterplatte, die an einer Seite mit einem Bodengitter gelenkig verbunden ist. Im Lagerzustand liegen alle Gitter plan auf dem Bodengitter auf. Vor dem Ausbringen wird die Gitterplatte zu einem Gewölbe gekrümmt und mit einem Haken an der Bodenplatte arretiert. Die Gitterklappen sind über Seile in ihrem Anstellwinkel zum Gittergewölbe verstellbar. Beim Ausbringen ziehen die Seile die Gitterklappen an das Gittergewölbe heran, nach dem Absetzen und Entlasten der Seile liegen die Gitterklappen dann auf dem Gewässerboden auf und geben das Innere des Gittergewölbes frei. Beim Einholen der Hummerfalle wird das Gittergewölbe dann durch Anziehen der Seile von den Gitterklappen verschlossen. Diese Hummerfalle eignet sich auch als Habitat, ist aber für Krebse wenig attraktiv.

Aus der FR 2 345 914 A1 ist ein Netz mit ovalem Querschnitt zum Fangen von Austern bekannt. Das Netz hat einen länglichen Öffnungsquerschnitt mit seitlichen Rundungen. Zum Verschließen des Netzes wird eine Vorrichtung benutzt, die aus zwei über ein Zentralscharnier miteinander verbundenen Platten von jeweils der Form des halben Öffnungsquerschnitts besteht. Diese Vorrichtung wird in zusammengeklapptem Zustand in das Netz eingeführt und geöffnet, sodass die Platten unter einem Öffnungswinkel zueinander angeordnet sind. Dabei ist aber die Öffnungstrecke kleiner als die Breite des Öffnungsquerschnitts. Durch Herunterdrücken des Zentralscharniers werden die Platten in einer Ebene ausgerichtet und haben jetzt eine Breite, die größer als die Breite des Öffnungsquerschnitts ist, sodass die Vorrichtung im Netz festklemmt. Eine Arretierung des Scharniers zur Vermeidung des Zurückklappens der Platten erfolgt durch Überstrecken des Scharniers. Das Netz ist jedoch nicht zum Fang von benthischen Organismen geeignet.

Der nächstliegende Stand der Technik, von dem die vorliegende Erfindung ausgeht, wird in der DE 101 61 174 C1 offenbart. Beschrieben wird eine transportierbare Aqualkulturzuchteinheit zur Ansiedlung und Erntung von Schwämmen. Dazu besteht die Aqualkulturzuchteinheit aus zwei rechteckigen Rahmen, in die Gitter als Anzucht- und Fangflächen eingebracht sind. Die beiden Rahmen sind an ihren gegenüberliegenden inneren Querseiten mittels eines Zentralscharniers gelenkig miteinander verbunden. Das Zentralscharnier weist eine einseitige Klapprichtung auf. Für die beiden Rahmen sind zwei verschiedene Positionen vorgesehen. Im ausgebrachten Zustand liegen die beiden Rahmen aufeinander (Öffnungswinkel der Vorrichtung 0°) und bilden gleichsam einen geschlossenen Kasten, in dessen Innenraum hinein sich die Schwämme ausgehend von den Ansiedelungs- und Fangflächen ausbreiten können. Die Vorrichtung wird auch im zusammengeklappten Zustand geborgen. Zum Ernten werden die beiden Rahmen geöffnet und ggfs. bis in eine Ebene (max. Öffnungswinkel der Vorrichtung 180°) aufgeklappt, sodass die angesiedelten Schwämme gut entnommen werden können. Mehrere dieser Vorrichtungen können zu großen Strukturen, beispielsweise in Zick-Zack-Form kombiniert werden.

Diese bekannte Vorrichtung ist auf die Anzucht und Erntung von ortsfesten Schwämmen ausgerichtet, benthische wirbellose bewegliche (vagile) Tiere können nur schwer oder gar nicht aufgezogen werden, da hier die Attraktivität als Habitat nicht ausreichend ist. Ein Fangen ist ebenfalls nicht möglich, da die vagilen Tiere beim Hieven der zusammengeklappten Vorrichtung diese schnell wieder verlassen können. Weiterhin ermöglicht die bekannte Vorrichtung in Einzelausführung keine Anpassung an den vorkommenden Gewässerboden, sondern kann nur plan auf dem Gewässerboden aufliegen. Erst durch eine Kombination mehrerer Vorrichtungen miteinander ist eine Anpassung möglich. Dadurch ergibt sich aber eine erschwerte Ausbringung bzw. Einholung oder eine relativ aufwändige Montage unter Wasser.

### AUFGABENSTELLUNG

Die **AUFGABE** für die vorliegende Erfindung ist daher darin zu sehen, eine transportable Vorrichtung der gattungsgemäßen, oben erläuterten Art zur Ansiedlung und Erntung von wirbellosen Tieren auf einem Gewässerboden dergestalt weiterzubilden, dass zum einen auch vagile wirbellose Tiere angesiedelt und geerntet werden können. Dabei soll die Vorrichtung ohne weitere Kombination mit weiteren Vorrichtungen an den Gewässerboden anpassbar sein und den Tieren ein besonders attraktives Habitat bieten. Zum anderen soll die Vorrichtung in einfacher Weise hiev- und fierbar sowie aberntbar sein und keinen Montageaufwand unter Wasser erfordern. Die erfindungsgemäße LÖSUNG für diese Aufgabe ist dem Anspruch 1 zu entnehmen, vorteilhafte Weiterbildungen der Erfindung werden in den Unteransprüchen aufgezeigt und im Folgenden im Zusammenhang mit der Erfindung näher erläutert.

Die erfindungsgemäße Vorrichtung ist zum einen gekennzeichnet durch zwei parallel beidseitig des Zentralscharniers angeordnete Nebenscharniere in den Rahmen mit zur Klapprichtung des Zentralscharniers entgegengesetzten einseitigen Klapprichtungen. Das Zentralscharnier dient bei der erfindungsgemäßen Vorrichtung deren Anpassung an die Struktur des Gewässerbodens durch Veränderung des Öffnungswinkels der Vorrichtung. Bei besonders ebenen und weichen Gewässerböden kann das Zentralscharnier vollständig aufgeklappt werden (Öffnungswinkel der Vorrichtung in einem Bereich von 180°), sodass beide Rahmen in einer Ebene auf dem Gewässerboden aufliegen. Eine flächige Ausbringung bietet sich bei feineren Sedimenten an, da es hier zu einer Einsedimentierung kommt und die Vorrichtung so auch von grabenden und scharrenden Großkrebsen, beispielsweise Hummern, genutzt werden kann. Bei unebenen und stark strukturierten Gewässerböden, beispielsweise dichten Steinfeldern, kann das Zentralscharnier entsprechend der unterschiedlichen Öffnungswinkeln der Vorrichtung aufgeklappt werden, sodass die beiden Rahmen unterschiedlich schräg auf dem Gewässerboden aufgestellt werden können. Je kleiner der Öffnungswinkel der Vorrichtung ist, desto höher ist der freie Raum unterhalb der Rahmen, sodass besonders hohe Unebenheiten überwunden werden können. Je nach Öffnungswinkel der Vorrichtung kann somit eine künstliche Höhenzonierung erzeugt werden, bei der kleinere vagile Tierarten in höheren Bereichen der Vorrichtung einen Lebensraum finden.

Die Nebenscharniere dienen dem verbesserten Ausbringen und Einholen der Vorrichtung, insbesondere im völlig ausgeklappten Zustand des Zentralscharniers. Beim Ausbringen sorgen die Nebenscharniere mit ihrer zum Zentralscharnier entgegengesetzten Klapprichtung für ein leichtes Anwinkeln der Rahmen, sodass die Vorrichtung keinen so hohen Widerstand im Wasser bietet. Beim Einholen können über die Nebenscharniere die beiden Rahmen vollständig nach oben geklappt werden, sodass diese sich gegenüberliegen und den Raum zwischen sich - und damit die dort befindlichen Tiere - einschließen. Dadurch wird eine sichere Erntung gewährleistet. Außerdem kann die Vorrichtung im zusammengeklappten Zustand Platz sparend gestapelt und transportiert werden. Weiterhin weisen bei der erfindungsgemäßen Vorrichtung das Zentralscharnier und/oder die beiden Nebenscharniere Feststellvorrichtungen auf, um jedes Scharnier entsprechend dem gewünschten Öffnungswinkel der Vorrichtung fixieren zu können.

Weiterhin sind bei der erfindungsgemäßen Vorrichtung röhrenförmige Bauelemente vorgesehen, die wesentlich der Stabilisierung und der Funktion der Vorrichtung dienen. Diese röhrenförmigen Bauelemente sind zumindest parallel entlang der inneren und äußeren Querseiten der beiden Rahmen angeordnet. Dabei befinden sich die röhrenförmigen Bauelemente auf den inneren Querseiten jeweils zwischen dem Zentralscharnier und dem Nebenscharnier und stabilisieren die Vorrichtung damit insbesondere im zusammengeklappten Zustand. Schließlich weist die erfindungsgemäße Vorrichtung noch eine Hiev- und Fiervorrichtung mit an den Rahmen an deren gegenüberliegenden Längsseiten angreifenden Seilen auf, mit der ein einfaches Ausbringen und Einholen der Vorrichtung beispielsweise von einem Schiff aus möglich ist. Über die Seile wird die Vorrichtung mit ihren beiden Rahmen geöffnet und geschlossen.

Der eingangs geschilderte Stand der Technik erfordert eine Vorrichtung, die in unmittelbarer Nähe von Ballungsräumen ausgesetzt werden kann und durch ihre Eigenschaften auch im Hochseeeinsatz eine nachhaltige Bewirtschaftung dieser Fanggründe ermöglicht. Diese Anforderungen werden von der Vorrichtung nach der Erfindung erfüllt. Diese bildet eine Kombination aus Fanggerät und künstlichem Riff und ist für die längere Exposition im Offshorebereich bestens geeignet. Eine Beköderung der Vorrichtung ist im Gegensatz zu normalen Fangkörben nicht nötig, sinnvoll ist sie lediglich bei einer sehr kurzen Ausbringungsdauer von nur wenigen Tagen. Die Attraktivität der Vorrichtung kann jedoch vor allem durch natürlichen Bewuchs noch vergrößert werden, sodass es von Vorteil sein kann, die Vorrichtung nach ihrem Einholen vor einem erneuten Ausbringen nicht von Bewuchs zu reinigen. Bei der Ernte wird die Vorrichtung nach der Erfindung an den Scharnieren automatisch geknickt und zusammengeklappt an Deck befördert. Zentral sind die vorher auf der Vorrichtung befindlichen Tiere enthalten. Die Klappbarkeit der Vorrichtung gibt nicht nur die Möglichkeit zum Fangen der Tiere und zum schnellen Einholen der Vorrichtung, sondern ist auch vorteilhaft für den Transport der gefangenen Tiere. Die Vorrichtung kann an Land komplett montiert werden und auf See Platz sparend transportiert und ohne viel Arbeitsaufwand ausgebracht werden. Ausbringung und Einholung der Vorrichtung nach der Erfindung kann mit herkömmlichen seegängigen Schiffen mit Außenbordkran unternommen werden.

Weitere Vorteile der Vorrichtung nach der Erfindung neben der Anpassbarkeit an den Gewässerboden bestehen in der hohen Flexibilität der Vorrichtung im Einsatz und in der Kombination eines künstlichen Riffes mit der Möglichkeit, die Vorrichtung zum ertragreichen Fang von beweglichen wirbellosen benthischen Tieren, speziell von Großkrebsen, zu nutzen. Im Besonderen ermöglicht es eine Bewirtschaftung von Großkrebsen und anderen vagilen Tieren an den für herkömmliche Vorrichtungen schwer zugänglichen Lebensräumen. Die Gefahr des Verhakens wird hierbei minimiert durch die spezielle Rahmenkonstruktion mit integrierten Fangflächen und durch die Möglichkeit, die Vorrichtung mit verschiedenen Öffnungswinkeln durch verschiedenen Öffnungswinkel des Zentralscharniers, d.h. mit unterschiedlicher Schräge (Anstellwinkel) der beiden Rahmen auszubringen. Die Vorrichtung nach der Erfindung eignet sich damit hervorragend für die nachhaltige Fischerei von räumlich begrenzten Habitaten. Unterwasserkonstruktionen, Steinriffe und Wracks sind auf Grund ihrer geringen Größe sensible Lebensräume, so dass eine nachhaltige Fischerei vor allem hier notwendig ist. Die Vorrichtung nach der Erfindung bietet insbesondere den dort ansässigen Krebsen eine Vergrößerung ihres Lebensraumes und fängt proportional zur Dichte der Tiere im Habitat, sodass Nachhaltigkeit gewährleistet ist. Die Fangflächen der Vorrichtung, insbesondere in Verbindung mit zusätzlichen Besatzmodulen (s.u.) stellen einen attraktiven Lebensraum dar und sorgen somit für gute Fängigkeit. Zusammen mit der Möglichkeit zur Höhenzonierung wird insbesondere verschiedenen Krebsarten und -größenklassen ein ideales Habitat geboten.

Die Vorrichtung nach der Erfindung eignet sich somit bestens für eine extensive Fischerei auf kleinen Gebieten, die bei ausreichender Anzahl an geeigneten Standorten aber auch intensiv betrieben werden. Des Weiteren kann die Vorrichtung nach der Erfindung auch als künstliches Riff eingesetzt werden, z. B. dort, wo die Begünstigung und Förderung einer Hartbodenfauna aus naturschutzfachlicher Sicht gewünscht ist. Die Vorrichtung nach der Erfindung kann somit besonders vorteilhaft und bevorzugt zur Ansiedlung und Erntung von benthischen Krebsen in der unmittelbaren Umgebung von Türmen von Windkraftanlagen in Offshore-Gebieten verwendet werden.

Ein besonderer Vorteil der Vorrichtung nach der Erfindung ist deren Anpassbarkeit an die jeweilige Bodenstruktur. Dazu ist es vorteilhaft, wenn eine Arretiervorrichtung zur Feststellung der beiden Rahmen in unterschiedlichen Öffnungswinkeln der Vorrichtung vorgesehen ist. Bei ebenen Böden kann die Vorrichtung in völlig ausgeklapptem Zustand ausgebracht werden. Dabei ist eine Verriegelung des Zentralscharniers vorteilhaft. Das Einklappen der Vorrichtung ist über die unverriegelten Nebenscharniere möglich. Bei strukturierten Böden kann die Vorrichtung vorteilhaft mit einem beliebigen Öffnungswinkel ausgebracht werden. Um hierbei eine große Stabilität zu erreichen, ist es vorteilhaft, wenn zumindest die Nebenscharniere verriegelt sind. Um den Öffnungswinkel der Vorrichtung nicht der Bodenstruktur zu überlassen, kann auch das Zentralscharnier verriegelt werden, sodass der Öffnungswinkel der Vorrichtung schon vor deren Absetzen festgelegt werden kann. Vorteilhaft kann die Feststellvorrichtung zur Fixierung des Zentralscharniers und/oder der Nebenscharniere mit einer zweifach abgewinkelten Führungsplatte, die mittels Bolzen am Rahmen befestigt ist, oder mit einer Stahlstange, die durch Halteösen am Rahmen geführt ist, ausgeführt sein.

Weiterhin kann bei einer Ausbringung der Vorrichtung in einem angewinkelten Zustand eine Arretiervorrichtung mit Ösen an den gegenüberliegenden Längsseiten beider Rahmen und an den Ösen befestigten Seilen oder Stangen einstellbarer Länge vorgesehen sein. Dadurch werden die beiden Rahmen sicher miteinander verbunden und am weiteren Aufklappen gehindert. Der Öffnungswinkel der Vorrichtung wird an Bord festgelegt und eingestellt. Bei einer Verwendung von biegeschlaffen Seilen kann die Vorrichtung trotzdem beim Einholen zusammenklappen. Beim Ausbringen werden die Rahmen durch den Wasserwiderstand auseinander gehalten, sodass die Aufstellung unter dem gewählten Öffnungswinkel der Vorrichtung erfolgt. Bei einer Ausbringung der Vorrichtung auf ebene Gewässerböden (Öffnungswinkel der Vorrichtung in einem Bereich von 180°) werden beim Ausbringen vorteilhaft die beiden Rahmen seitlich leicht angestellt (Öffnungswinkel der Vorrichtung in einem Bereich von 45°). Dabei kann das leichte Anwinkeln begrenzt werden von einer Aufklapphilfe mit zumindest einer zwischen den unter einem Öffnungswinkel angestellten Rahmen gehaltenen schwimmfähigen und verliersicheren Leiste. Beim Absetzen der Vorrichtung auf dem Gewässerboden klappen die Rahmen dann herunter und geben die Aufklapphilfe frei. Durch ihre Schwimmfähigkeit wird ein Verhaken in der Vorrichtung vermieden, sodass die Funktion der Vorrichtung sowie der Bergungsvorgang nicht behindert werden. Durch eine Sicherungsleine kann ein Abtreiben der freigegebenen Leiste einfach verhindert werden.

Die hauptsächlichen Fangflächen bei der Vorrichtung nach der Erfindung liegen plan in den beiden Rahmen, sodass ein Verhaken an strukturierten Untergründen sicher vermieden ist. Vorteilhaft kann es sich um Fangflächen mit eingespannten schweren Netzen oder netzförmigen Kunststoffmatten handeln. Die Kunststoffmatten können beispielsweise als Gummimatten mit rechteckigen Öffnungen ausgeführt sein. Zusätzlich zu den Fangflächen können bei der Vorrichtung nach der Erfindung auch Sammelnetze entlang der Längsseiten der Rahmen zwischen den röhrenförmigen Bauelementen und/oder an den äußeren Querseiten der Rahmen unterhalb der röhrenförmigen Bauelemente vorgesehen sein. Diese Netze dienen insbesondere dem Fang von kleineren Tieren, die ansonsten beim Einholen aus der Vorrichtung entweichen könnten.

Die Vorrichtung nach der Erfindung dient nicht nur als Fanggerät sondern gleichzeitig auch als Besiedelungsstruktur, d.h. als künstliches Riff bzw. Habitat. Um dieses für eine möglichst große Anzahl unterschiedlicher Tiere, insbesondere Krebse, besonders attraktiv zu gestallten, können entsprechend an die Bedürfnisse der Tiere angepasste Besatzmodule auf den Fangflächen vorgesehen sein. Diese Besatzmodule bieten Unterschlupf für Großkrebse des hart- und Weichbodensubstrats und können nach Bedarf auf den Fangflächen versetzt werden. Vorteilhaft kann es sich um Besatzmodule aus jeweils zwei Halbröhren handeln, die an ihren Scheitelpunkten miteinander verbunden sind. dabei können verschiedenen Materialien mit unterschiedlicher Rauheit (z.B. angerautes PVC) verwendet werden. Die sich zum Scheitelpunkt verengenden Räume zwischen den beiden Halbröhren sind besonderes attraktiv für kleinere Krebse. Die größeren, gebogenen Flächen mit seitlichem Schutz sind hingegen bevorzugte Besiedelungsorte für größere Krebse. Alternative Besatzmodule, beispielsweise in Form von einfachen Steinen oder komplexen Mikrohabitaten, sind ebenfalls ohne weiteres einsetzbar.

Die röhrenförmigen Bauelemente sind wesentlich für die Funktion und die Stabilität der Vorrichtung nach der Erfindung. Sie füllen den Raum zwischen den Scharnieren und stabilisieren damit die Basiskonstruktion im zusammengeklappten Zustand. Sie können vorteilhaft mit Gewichtselementen und/oder Ausgleichsöffnungen zum Entweichen von Luft versehen sein. Die Gewichtselemente erleichtern das Herabsinken der Vorrichtung auf den Gewässerboden. Die röhrenförmigen Bauteile an den äußeren Querseiten können ebenfalls mit Gewichtselementen versehen werden, um das Aufklappen bei der Ausbringung zu beschleunigen oder im angewinkelten Ausbringungszustand für zusätzliche Stabilität zu sorgen. Ein größerer Röhrendurchmesser vereinfacht ebenfalls das Aufklappen. Die Ausgleichsöffnungen dienen ebenfalls dem besseren Absinkverhalten, da durch sie aufgestaute Luft leicht entweichen kann. Beim Einholen dienen die Ausgleichsöffnungen dem Abfließen von Wasserreserven, sodass die Vorrichtung nach der Erfindung weitgehend wasserfrei an Deck eines Schiffes geholt werden kann. Weiterhin können die röhrenförmigen Bauelemente seitliche Öffnungen zu den Fangflächen hin aufweisen, sodass sie ebenfalls als Unterschlupf für Krebse dienen. Die seitlichen Öffnungen können sich dabei vorteilhaft nur über Abschnitte erstrecken. Durch Trennwände zwischen den Abschnitten entstehen so interessante Lebensräume für die Krebse.

Das Öffnen und Schließen der Vorrichtung erfolgt wesentlich über die Hiev-und Fiervorrichtung mit Seilen, die an die Rahmen angreifen. Vorteilhaft ist eine Zusammenführung aller Seile zu einem Auftriebskörper. Dieser sorgt für ein Straffhalten der Seile, sodass diese sich nicht in der Vorrichtung verfangen können. Weiterhin verhindert der Auftriebskörper übermäßiges Rütteln an der Unterwasserkonstruktion, an der die Vorrichtung ggfs. befestigt ist. Vorteilhaft kann die Vorrichtung nach dem Ausbringen an einer Mooringleine mit Bodenanker und Oberflächenboje oder an einer Unterwasserkonstruktion, beispielsweise dem Pylon eines Windrades, befestigt sein. Weitere Details zu der Vorrichtung nach der Erfindung sind dem nachfolgenden speziellen Beschreibungsteil zu entnehmen.

### AUSFÜHRUNGSBEISPIELE

Ausbildungsformen der transportierbaren Vorrichtung zur Ansiedlung und Erntung von wirbellosen Tieren in der Nähe eines Gewässerbodens nach der Erfindung werden nachfolgend anhand der schematischen Figuren zum weiteren Verständnis der Erfindung näher erläutert. Dabei zeigt:
- **FIGUR 1**: eine perspektivische Ansicht eine angestellten Vorrichtung,
- **FIGUR 2**: eine Draufsicht einer ausgeklappten Vorrichtung,
- **FIGUR 3A**: eine Seitenansicht einer ausgeklappten Vorrichtung,
- **FIGUR 3B**: eine Seitenansicht einer angestellten Vorrichtung,
- **FIGUR 4A**: eine Seitenansicht einer Vorrichtung beim Fieren,
- **FIGUR 4B**: eine Seitenansicht einer Vorrichtung beim Hieven,
- **FIGUR 5A**: eine perspektivische Ansicht einer ersten Feststellvorrichtung,
- **FIGUR 5B**: eine perspektivische Ansicht einer zweiten Feststellvorrichtung und
- **FIGUR 6**: eine perspektivische Ansicht einer ausgebrachten Vorrichtung in der Nähe einer Windkraftanlage.

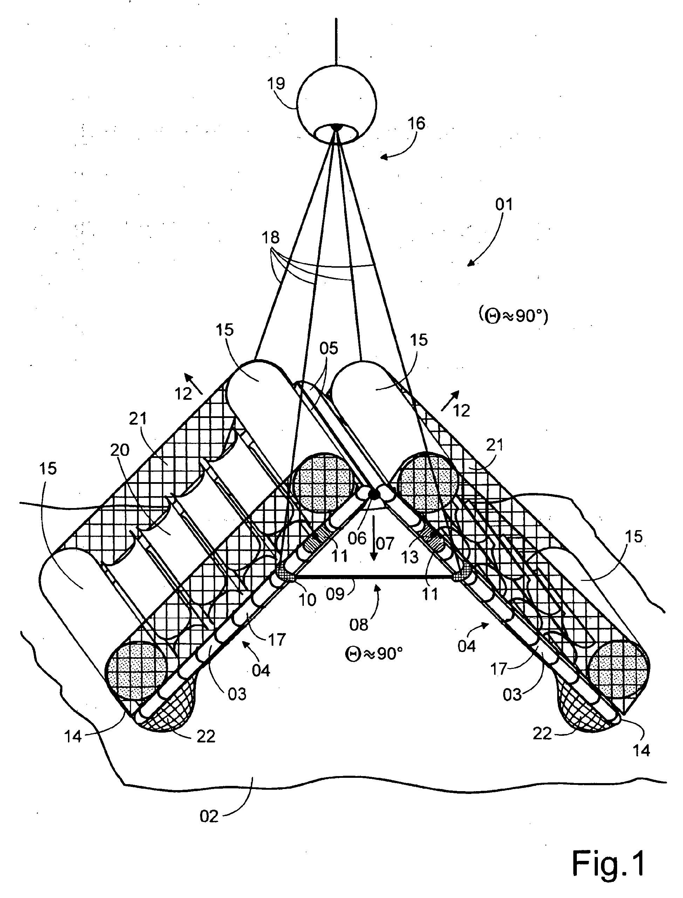

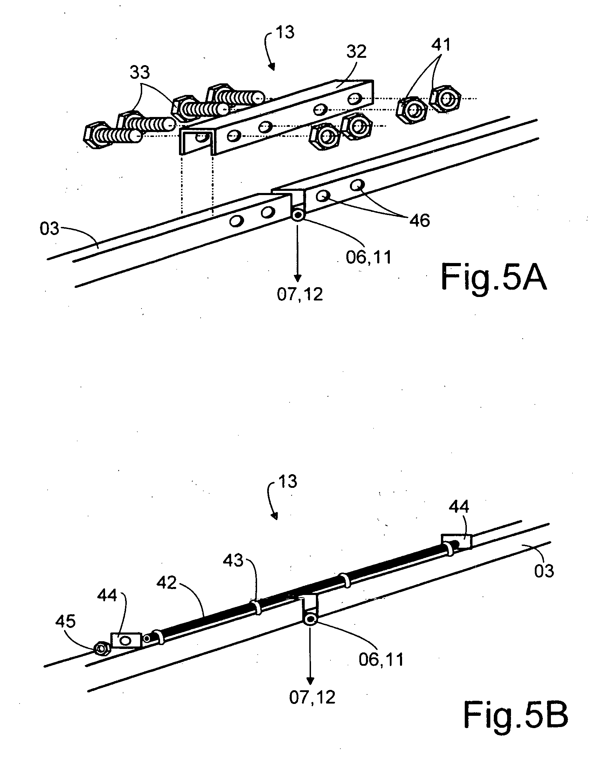

Die Figur 1 zeigt eine transportierbare Vorrichtung 01 nach der Erfindung zur Ansiedlung und Erntung von wirbellosen Tieren in der Nähe eines Gewässerbodens 02. Dargestellt sind zwei viereckige (im Ausführungsbeispiel rechteckige) Rahmen 03 mit Fangflächen 04. An ihren gegenüberliegenden inneren Querseiten 05 sind die Rahmen 03 über ein Zentralscharnier 06 mit einseitiger Klapprichtung 07 klappbar miteinander verbunden. Zwischen den Rahmen 03 können über das Zentralscharnier 06 unterschiedliche Öffnungswinkel Θ der Vorrichtung 01 zwischen 0° (zugeklappter Zustand) und 180° (vollständig geöffneter, gestreckter Zustand) eingestellt werden. Im gezeigten Ausführungsbeispiel ist eine gewinkelte Ausführung der Vorrichtung 01 mit einem rechtwinkligen Öffnungswinkel (Θ ≅ 90°) dargestellt. Die Fixierung dieses Öffnungswinkels Θ der Vorrichtung 01 erfolgt über eine Arretiervorrichtung 08, die im gezeigten Ausführungsbeispiel aus zwei Stangen 09 besteht, die in Ösen **10** an den Rahmen **03** eingreifen. Beiderseits neben dem Zentralscharnier **06** sind zwei Nebenscharniere **11** vorgesehen, die eine zur Klapprichtung **07** des Zentralscharniers **06** entgegengesetzte Klapprichtung **12** aufweisen. Im gezeigten Ausführungsbeispiel sind beide Nebenscharniere **11** vollständig geöffnet (Öffnungswinkel Θ der Vorrichtung **01 ≅** 180°) und in dieser gestreckten Position über eine Feststellvorrichtung **13** (vergleiche **Figur 5A, 5B**) fixiert.

An den inneren Querseiten **05** sind beidseitig vom Zentralscharnier **06** ebenso wie an äußeren Querseiten **14** der Rahmen **03** röhrenförmige Bauelemente **15** parallel angeordnet, die vornehmlich der Stabilisierung der Vorrichtung **01** dienen. Weiterhin ist eine Hiev- und Fier-Vorrichtung **16** (Einholen-Ausbringen) mit an den Rahmen **03** an deren gegenüberliegenden Längsseiten **17** angreifenden Seilen **18** vorgesehen. Dabei sind die Seile **18** in einem gemeinsamen Auftriebskörper **19** zusammengeführt. Weiterhin zeigt die Vorrichtung **01** noch Besatzmodule **20** auf den Fangflächen **04** sowie gespannte Sammelnetze **21** entlang der Längsseiten **17** der Rahmen **03** zwischen den röhrenförmigen Bauelementen **15** und ausgebauchte Sammelnetze **22** an den äußeren Querseiten **14** der Rahmen **03** unterhalb der röhrenförmigen Bauelemente **15.**

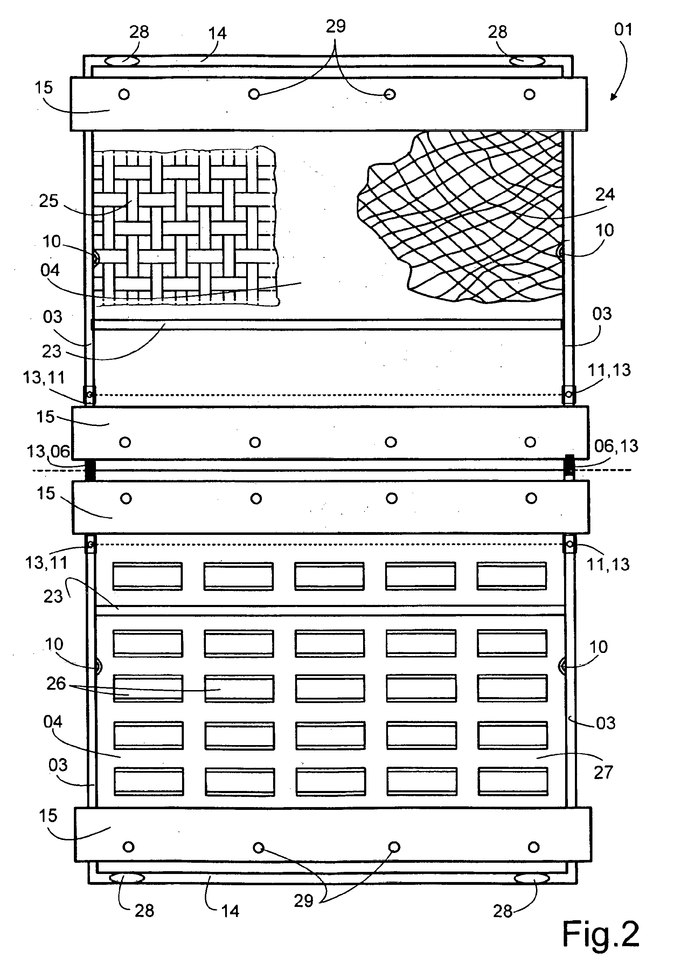

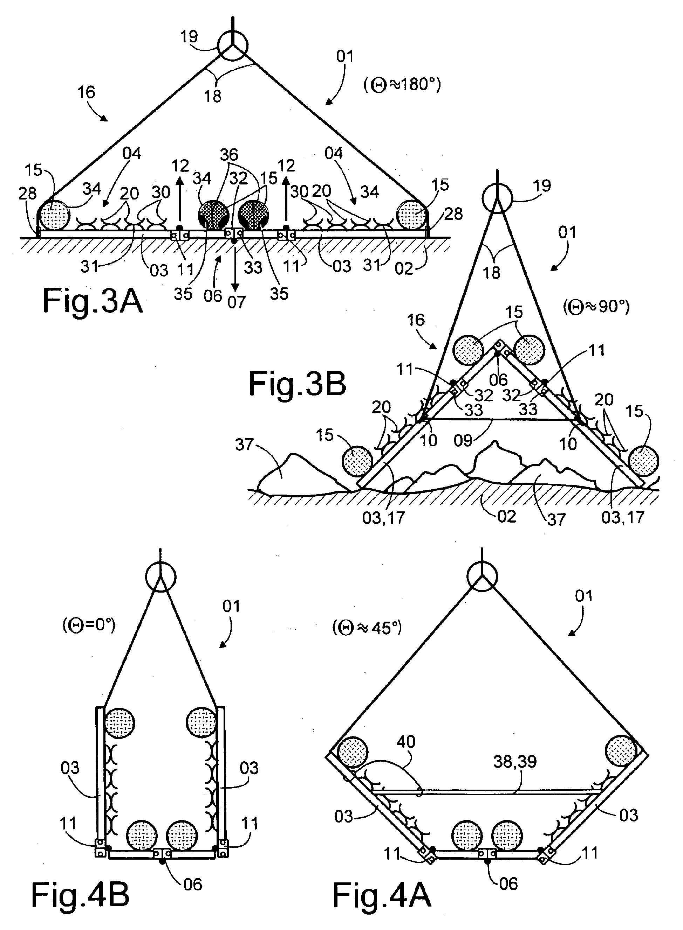

Die **FIGUR 2** zeigt die Vorrichtung **01** nach der Erfindung in der vollständig aufgeklappten Ausführung in der Ansicht auf das Innere der Vorrichtung **01** (ohne Besatzmodule **20**). Dargestellt sind die beiden Rahmen **03** mit zusätzlichen stabilisierenden Verstrebungen **23** und den Fangflächen **04,** die unterschiedlich ausgeführt sein können. Beispielhaft sind als Alternativen ein stabiles Netz **24,** ein Geflecht **25** oder eine Ausschnitte **26** aufweisende Kunststoffmatte **27** aufgezeigt. Weiterhin sind das Zentralscharnier **06** und die beiden Nebenscharniere 11 (mit gestrichelten Klappachsen und Feststellvorrichtungen **13**, vergleiche **FIGUREN 5A, 5B**) sowie die Ösen **10** für die Seile **18** der Hiev- und Fiervorrichtung **16** zu erkennen. Zusätzlich sind weitere Ösen **28** zum alternativen Anschlagen der Seile **18** an den äußeren Querseiten 1**4** der Rahmen **03** zu erkennen. Diese Konstellation wird bei der völlig ausgeklappten Form der Vorrichtung **01** für ebene Gewässerböden **02** genutzt (vergleiche **FIGUR 3A**). Die röhrenförmigen Bauelemente **15** weisen Ausgleichsöffnungen **29** zum Entlassen von Luft (im Wasser) und Wasser (in Luft) auf.

In der **FIGUR 3A** ist die Vorrichtung **01** nach der Erfindung in gestreckter Form (Θ ≅180°) für einen ebenen Gewässerboden **02** in der Seitenansicht dargestellt. Nicht gezeigte oder beschriebene Bezugszeichen sind den vorangehenden Figuren und Beschreibungen zu entnehmen. Zusätzlich zu erkennen sind die Besatzmodule **20,** die im gewählten Ausführungsbeispiel aus zwei Halbröhren **30** bestehen, die mit ihren Scheitelpunkten **31** miteinander verbunden sind. Die Besatzmodule **20** sind beliebig auf den Fangflächen **04** positionier- und versetzbar und können in den unterschiedlichsten, den zu fangenden Tieren angepassten Formen ausgebildet sein. Das Zentralscharnier **06** ist über eine Führungsplatte **32** und zwei Bolzen **33** festgelegt. Zu erkennen sind seitliche Öffnungen **34** in den röhrenförmigen Bauelementen **15** zum Einlass von Tieren. Die röhrenförmigen Bauelemente **15** weisen weiterhin Gewichtselemente **35** zur Verbesserung des Abtriebs und des Aufklappens sowie Trennwände **36** zur Unterteilung des Inneren und weiteren Verbesserung der Habitatqualität für die Tiere, insbesondere Krebse, auf. Zum Hieven und Fieren der Vorrichtung **01** können, aber nicht gemäß der Erfindung, die Seile **18** der Hiev- und Fier-Vorrichtung **16** an den weiteren Ösen **28** angeschlagen werden.

Die **FIGUR 3B** zeigt die Vorrichtung **01** nach der Erfindung in angestellter Form (hier Öffnungswinkel Θ ≅ 90°, steilere oder flachere Öffnungswinkel der Vorrichtung **01** sind je nach Bodenstruktur ebenfalls ohne weiteres möglich) für eine Positionierung auf einem stark strukturierten Gewässerboden **02,** beispielsweise einem dichten Feld aus Steinen **37.** Nunmehr sind die beiden Nebenscharniere **11** sind mittels Führungsplatten **32** und Bolzen **33** (vergleiche **FIGUR 5A**) fixiert. Der Öffnungswinkel Θ der Vorrichtung **01** kann sich entweder durch die aktuelle Bodenstruktur von selbst ergeben oder bereits an Bord durch Vorsehen der Stangen **09** fest eingestellt werden. Bei einer entsprechenden Fixierung des Zentralscharniers **06** verbleibt die Vorrichtung **01** beim Hieven und Fieren in dieser Stellung und wird nicht geöffnet oder zusammengeklappt. Zur Vereinfachung sind die Seile **18** der Hiev- und Fiervorrichtung **16** deshalb an den Ösen **10** angeschlagen.

In der **FIGUR 4A** ist die Vorrichtung **01** in der Form für das Ausbringen auf ebenem Gewässerboden **02** gemäß **FIGUR 3A** mit verriegeltem Zentralscharnier **06** dargestellt. Durch das Anklappen der Rahmen **03** in einen angewinkelten Zustand (Θ in einem Bereich von 45°) wird das Absenken erleichtert. Dazu wird zwischen die Rahmen **03** im angehobenen Zustand eine Aufklapphilfe **38**, im gezeigten Ausführungsbeispiel in Form einer einfachen Leiste **39**, geklemmt. Die Leiste **39** kann aus Holz und damit schwimmfähig sein, sodass sie nach der Freigabe nach Absetzen der Vorrichtung **01** und Herunterklappen der Rahmen **03** aufschwimmt und die Vorrichtung **01** nicht behindert. Eine Verliersicherung der freigegebenen Leiste **39** ist durch eine Sicherungsleine **40** gegeben, sodass die freigegebene Leiste **39** nicht abdriftet.

Die **FIGUR 4B** zeigt die Vorrichtung **01** zur Ausbringung auf ebenem Gewässerboden **02** gemäß **FIGUR 3A** in zusammengeklapptem Zustand für das Einholen und Lagern. Das Zentralscharnier **06** ist immer noch verriegelt, die Nebenscharniere **11** sind jetzt jedoch winklig eingeklappt (geschlossen), sodass sich für die gesamte Vorrichtung ein Öffnungswinkel Θ ≅ 0° mit parallelen Rahmen **03** ergibt. In dieser Position ist der Tierbesatz optimal in der Vorrichtung **01** gefangen. Die Erntung erfolgt dann nach dem Einholen an Bord des Schiffes bei ausgeklappten Rahmen **03**. Danach ist die Vorrichtung **01** - ohne eine Reinigung s.o. - sofort wieder einsatzfähig oder kann in eingeklapptem Zustand gelagert werden.

Die **FIGUREN 5A**, **5B** zeigen in perspektivischer Explosionsdarstellung zwei Ausführungsformen der Feststellvorrichtung **13** zum Fixieren des Zentralscharniers **06** oder der Nebenscharniere **11** in vollständig geöffneter Position. Die **FIGUR 5A** zeigt die bereits weiter oben erwähnte Ausführungsform mit der Führungsplatte **32** und den Bolzen **33** im Detail. Die Führungsplatte **32** ist in der Stärke des Rahmens **03** zweifach abgewinkelt und wird entgegen der Klapprichtung **07, 12** im Bereich des Zentralscharniers **06** oder der Nebenscharniere **11** über den Rahmen **03** geschoben. Die Festlegung der Führungsplatte **32** erfolgt über die durch den Rahmen **03** durch Bohrungen **46** hindurchgeführten Bolzen **33**, die mit Muttern **41** gesichert werden. Die **FIGUR 5B** zeigt eine Ausführungsform, die auch zur Aufnahme stärkerer Kräfte bei einer größeren Dimensionierung der Vorrichtung 01 geeignet ist. In diesem Falle wird entgegen der Klapprichtung **07**, **12** über das Zentralscharnier **06** oder die Nebenscharniere **11** eine Stahlstange **42** gelegt, die in Halteösen **43** auf dem Rahmen **03** fixiert wird. Gegen das Herausrutschen der Stahlstange **42** aus den Halteösen **43** weist diese an ihrem einen Ende eine Endplatte **44** auf. An ihrem anderen Ende wird nach dem Durchschieben der Stahlstange **42** durch die Halteösen **43** eine weitere Endplatte **44** mittels einer Sicherungsmutter **45** angeschraubt. Bei einer entsprechenden Längenbemessung der Stahlstange **42** können auch das Zentralscharnier **06** und die Nebenscharniere **11** gleichzeitig fixiert werden. Durch eine entsprechende Winkelung der Führungsplatte **32** oder der Stahlstange **42** können das Zentralscharnier **06** und/oder die Nebenscharniere **11** auch in anderen Winkeln, die kleiner als der vollständig gestreckte Winkel sind, von der Feststellvorrichtung **13** fixiert werden.

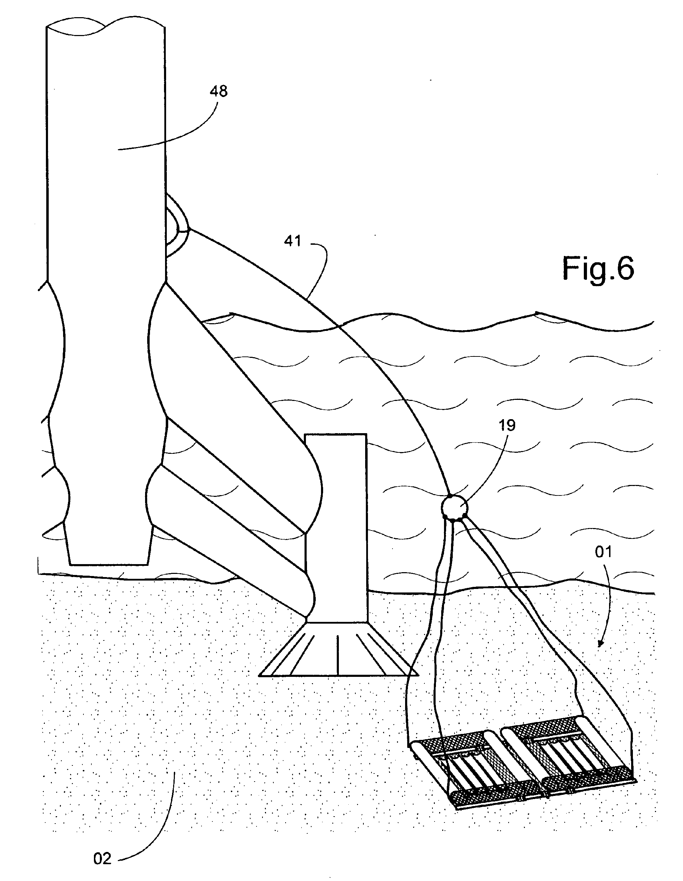

Die **FIGUR 6** schließlich zeigt die Ausbringung mehrerer Vorrichtung **01** nach der Erfindung in ausgeklappter Form für ebenen Gewässerboden **02** mit einer Anbindung des Auftriebskörpers **19** über ein Befestigungsseil 47 an den Turm **48** einer Windkraftanlage. Diese Anwendung zeigt, dass sich die Vorrichtung **01** nach der Erfindung besonders gut dazu eignet, durch Bereitstellung von künstlichen Riffen in schwer zugänglichen Gebieten eine nachhaltige und einfache Erntung von benthischen Tieren, insbesondere Krebsen und Hummern, zu ermöglichen.

### BEZUGSZEICHENLISTE

- 01: Vorrichtung
- 02: Gewässerboden
- 03: Rahmen
- 04: Fangfläche
- 05: innere Querseite 03
- 06: Zentralscharnier
- 07: Klapprichtung 06
- 08: Arretiervorrichtung
- 09: Stange
- 10: Öse
- 11: Nebenscharnier
- 12: Klapprichtung 11
- 13: Feststellvorrichtung
- 14: äußere Querseite 03
- 15: röhrenförmiges Bauelement
- 16: Hiev- und Fier-Vorrichtung
- 17: Längsseite 03
- 18: Seil
- 19: Auftriebskörper
- 20: Besatzmodul
- 21: gespanntes Sammelnetz
- 22: ausgebauchtes Sammelnetz
- 23: Verstrebung
- 24: Netz
- 25: Geflecht
- 26: Ausschnitt
- 27: Kunststoffmatte
- 28: weitere Öse
- 29: Ausgleichsöffnung
- 30: Halbröhre
- 31: Scheitelpunkt
- 32: Führungsplatte
- 33: Bolzen
- 34: Öffnung
- 35: Gewichtselement
- 36: Trennwand
- 37: Stein
- 38: Aufklapphilfe
- 39: Leiste
- 40: Sicherungsleine
- 41: Mutter
- 42: Stahlstange
- 43: Halteöse
- 44: Endplatte
- 45: Sicherungsmutter
- 46: Bohrung
- 47: Befestigungsseil
- 48: Turm Windkraftanlage

- Θ: Öffnungswinkel von 01

## Patentansprüche

1. Transportierbare Vorrichtung (01) zur Ansiedlung und Erntung von wirbellosen Tieren in der Nähe eines Gewässerbodens (02) mit zumindest zwei viereckigen Rahmen (03), die Fangflächen (04) aufweisen und mittels eines zwischen gegenüberliegenden inneren Querseiten (05) der Rahmen (03) angeordneten Zentralscharniers (06) in dessen einseitiger Klapprichtung (07) in unterschiedlichen Öffnungswinkeln (Θ) der Vorrichtung (01) positionierbar sind,
**GEKENNZEICHNET DURCH**
• zwei beidseitig des Zentralscharniers (06) angeordnete Nebenscharniere (11) in den Rahmen (03) mit zur Klapprichtung (07) des Zentralscharniers (06) entgegengesetzten einseitigen Klapprichtungen (12),
• eine Anpassbarkeit des Öffnungswinkels (Θ) der Vorrichtung (01) an die Struktur des Gewässerbodens (02),
• Feststellvorrichtungen (13) für das Zentralscharnier (06) und/oder die beiden Nebenscharniere (11),
• jeweils zwischen dem Zentralscharnier (06) und den beiden Nebenscharnieren (11) an den inneren Querseiten (05) sowie an äußeren Querseiten (14) der Rahmen (03) parallel angeordnete röhrenförmige Bauelemente (15) und
• eine Hiev- und Fiervorrichtung (16) mit an den Rahmen (03) an deren gegenüberliegenden Längsseiten (17) angreifenden Seilen (18).

2. Transportierbare Vorrichtung (01) nach Anspruch 1,
**GEKENNZEICHNET DURCH**
eine Feststellvorrichtung (13) zur Fixierung des Zentralscharniers (06) und/oder der Nebenscharniere (11) mit einer zweifach abgewinkelten Führungsplatte (32), die mittels Bolzen (33) am Rahmen (03) befestigt ist, oder mit einer Stahlstange (42), die **durch** Halteösen (43) am Rahmen (03) geführt ist.

3. Transportierbare Vorrichtung (01) nach Anspruch 1,
**GEKENNZEICHNET DURCH**
eine Arretiervorrichtung (08) zur Positionierung der beiden Rahmen (03) in unterschiedlichen Öffnungswinkeln (Θ) der Vorrichtung (01).

4. Transportierbare Vorrichtung (01) nach Anspruch 3,
**GEKENNZEICHNET DURCH**
eine Arretiervorrichtung (08) mit Ösen (10) an gegenüberliegenden Längsseiten (17) beider Rahmen (03) und an den Ösen (10) befestigte Seilen (18) oder Stangen mit in Abhängigkeit des einzustellenden Öffnungswinkels (Θ) der Vorrichtung (01) festgelegter Länge.

5. Transportierbare Vorrichtung (01) nach Anspruch 1,
**GEKENNZEICHNET DURCH**
eine Aufklapphilfe (38) beim Fieren der Vorrichtung (01) mit zumindest einer zwischen den unter einem Öffnungswinkel (Θ) der Vorrichtung (01) angestellten Rahmen (03) gehaltenen schwimmfähigen und verliersicheren Leiste (39).

6. Transportierbare Vorrichtung (01) nach Anspruch 1,
**GEKENNZEICHNET DURCH**
Fangflächen (04) mit eingespannten Netzen (24), Geflechten (25) oder Kunststoffmatten (27) mit Ausschnitten (26).

7. Transportierbare Vorrichtung (01) nach Anspruch 1,
**GEKENNZEICHNET DURCH**
gespannte Sammelnetze (21) entlang der Längsseiten (17) der Rahmen (03) und/oder ausgebauchte Sammelnetze (22) entlang der äußeren Querseiten (14) der Rahmen (03).

8. Transportierbare Vorrichtung (01) nach Anspruch 1,
**GEKENNZEICHNET DURCH**
an die auf dem Gewässerboden (02) lebenden wirbellosen Meerestiere angepasste, versetzbare Besatzmodule (20) auf den Fangflächen (04).

9. Transportierbare Vorrichtung (01) nach Anspruch 8,
**GEKENNZEICHNET DURCH**
Besatzmodule (20) aus jeweils zwei Halbröhren (30), die an ihren Scheitelpunkten (31) miteinander verbunden sind.

10. Transportierbare Vorrichtung (01) nach Anspruch 1,
**GEKENNZEICHNET DURCH**
röhrenförmige Bauelemente (15) mit Gewichtselementen (35) und/oder Ausgleichsöffnungen (29) zum Entweichen von Luft oder Wasser.

11. Transportierbare Vorrichtung (01) nach Anspruch 1,
**GEKENNZEICHNET DURCH**
röhrenförmige Bauelemente (15) mit seitlichen Öffnungen (34) zu den Fangflächen (04) hin.

12. Transportierbare Vorrichtung (01) nach Anspruch 11,
**GEKENNZEICHNET DURCH**
seitliche Öffnungen (34) einer Abschnittslänge und Trennwänden (35) zwischen den Abschnitten.

13. Transportierbare Vorrichtung (01) nach Anspruch 1,
**GEKENNZEICHNET DURCH**
eine Hiev- und Fiervorrichtung (16) mit einem bodennahen Auftriebskörper (19), an dem alle Seile (18) zusammengeführt sind.

14. Transportierbare Vorrichtung (01) nach Anspruch 1,
**GEKENNZEICHNET DURCH**
eine Befestigung an einer Mooringleine mit Bodenanker und Oberflächenboje oder an einer Unterwasserkonstruktion.

15. Anwendung der transportierbaren Vorrichtung (01) nach Anspruch 1 zur Ansiedlung und Erntung von benthischen Krebsen in der unmittelbaren Umgebung von Türmen (48) von Windkraftanlagen in Offshore-Gebieten.

## Claims

1. A transportable device (01) for establishing a colony of invertebrates and for harvesting same in the vicinity of a bed of a body of water (02), having at least two rectangular frames (03), which have catching faces (04) and can be positioned at different opening angles (Θ) of the device (01) by means of a central hinge (06), which is arranged between mutually opposite inner transverse sides (05) of the frames (03), in the one-sided folding direction (07) of the said hinge,
**CHARACTERISED BY**
• two secondary hinges (11), which are arranged on both sides of the central hinge (06), in the frames (03), having one-sided folding directions (12) in the opposite direction to the folding direction (07) of the central hinge (06),
• the possibility of adapting the opening angle (Θ) of the device (01) to the structure of the bed of the body of water (02),
• fixing devices (13) for the central hinge (06) and/or for the two secondary hinges (11),
• tubular components (15), which are in each case arranged in parallel between the central hinge (06) and the two secondary hinges (11) on the inner transverse sides (05) and on outer transverse sides (14) of the frames (03), and
• a heaving and veering device (16) having cables (18) which act on the frames (03) on the mutually opposite longitudinal sides (17) thereof.

2. The transportable device (01) according to Claim 1,
**CHARACTERISED BY**
a fixing device (13) for fixing the central hinge (06) and/or the secondary hinges (11), having a double-wound guide plate (32), which is fastened on the frame (03) by means of bolts (33) or having a steel rod (42), which is guided through retaining eyelets (43) on the frame (03).

3. The transportable device (01) according to Claim 1,
**CHARACTERISED BY**
a locking device (08) for positioning the two frames (03) at different opening angles (Θ) of the device (01).

4. The transportable device (01) according to Claim 3,
**CHARACTERISED BY**
a locking device (08), having eyelets (10) on mutually opposite longitudinal sides (17) of both frames (03) and cables (18) fastened to the eyelets (10) or rods having a length defined depending on the opening angle (Θ) of the device (01) to be set.

5. The transportable device (01) according to Claim 1,
**CHARACTERISED BY**
an opening aid (38) when veering the device (01), having at least one floating, loss-proof strip (39), which is held between the frames (03) set at an opening angle (Θ) of the device (01).

6. The transportable device (01) according to Claim 1,
**CHARACTERISED BY**
catching faces (04) having fixed nets (24), meshes (25) or plastic mats (27) with cut-outs (26).

7. The transportable device (01) according to Claim 1,
**CHARACTERISED BY**
stretched collecting nets (21) along the longitudinal sides (17) of the frames (03) and/or bulging collecting nets (22) along the outer transverse sides (14) of the frames (03).

8. The transportable device (01) according to Claim 1,
**CHARACTERISED BY**
displaceable edging modules (20), which are adapted to the marine invertebrates living on the bed of the body of water (02), on the catching faces (04).

9. The transportable device (01) according to Claim 8,
**CHARACTERISED BY**
edging modules (20) consisting of in each case two half-pipes (30), which are connected to each other at their apices (31).

10. The transportable device (01) according to Claim 1,
**CHARACTERISED BY**
tubular components (15) having weight elements (35) and/or equalisation openings (29) for allowing air or water to escape.

11. The transportable device (01) according to Claim 1,
**CHARACTERISED BY**
tubular components (15) having lateral openings (34) towards the catching faces (04).

12. The transportable device (01) according to Claim 11,
**CHARACTERISED BY**
lateral openings (34) of a section length and partitions (35) between the sections.

13. The transportable device (01) according to Claim 1,
**CHARACTERISED BY**
a heaving and veering device (16) having a buoyant body (19) close to the bed, on which all the cables (18) are brought together.

14. The transportable device (01) according to Claim 1,
**CHARACTERISED BY**
a fastening to a mooring line having a bed anchor and surface buoy or to an underwater structure.

15. The use of the transportable device (01) according to Claim 1 for establishing a colony of benthic crustaceans and harvesting same in the immediate surroundings of towers (48) of wind turbines in offshore regions.

## Revendications

1. Dispositif transportable (01) pour l'élevage et la récolte d'animaux invertébrés à proximité d'un fond d'eau (02), avec au moins deux cadres carrés (03) comportant des surfaces de capture (04) et pouvant être positionnés selon différents angles d'ouverture (Θ) du dispositif (01), au moyen d'une charnière centrale (06) agencée entre des côtés transversaux intérieurs (05) opposés des cadres (03), dans la direction de rabattement unilatérale (07) de ceux-ci,
**CARACTERISE PAR**
• deux charnières secondaires (11) agencées de part et d'autre de la charnière centrale (06) dans les cadres (03), avec des directions de rabattement unilatérales (12) opposées à la direction de rabattement (07) de la charnière centrale (06),
• une capacité d'adaptation de l'angle d'ouverture (Θ) du dispositif (01) par rapport à la structure du fond d'eau (02),
• des dispositifs de blocage (13) pour la charnière centrale (06) et/ou les deux charnières secondaires (11),
• des éléments de construction (15) tubulaires agencés parallèlement entre la charnière centrale (06) et les deux charnières secondaires (11), sur les côtés transversaux intérieurs (05) ainsi que sur les côtés transversaux extérieurs (14) des cadres (03), et
• un dispositif de halage et de filage (16) avec des câbles (18) engageant les cadres (03) au niveau de leurs côtés longitudinaux (17) opposés.

2. Dispositif transportable (01) selon la revendication 1,
**CARACTERISE PAR**
un dispositif de blocage (13) pour la fixation de la charnière centrale (06) et/ou des charnières secondaires (11) avec une plaque de guidage (32) doublement coudée et fixée au cadre (03) au moyen de boulons (33), ou avec une barre d'acier (42) guidée sur le cadre (03) par des oeillets de maintien (43).

3. Dispositif transportable (01) selon la revendication 1,
**CARACTERISE PAR**
un dispositif d'arrêt (08) pour le positionnement des deux cadres (03) selon différents angles d'ouverture (Θ) du dispositif (01).

4. Dispositif transportable (01) selon la revendication 3,
**CARACTERISE PAR**
un dispositif d'arrêt (08) avec des oeillets (10) sur des côtés longitudinaux (17) opposés des deux cadres (03), et des câbles (18) ou des barres fixés/fixées au oeillets (10), d'une longueur déterminée en fonction de l'angle d'ouverture (Θ) à régler pour le dispositif (01).

5. Dispositif transportable (01) selon la revendication 1,
**CARACTERISE PAR**
un auxiliaire d'ouverture par rabattement (38) pour le filage du dispositif (01), avec au moins une baguette (39) inamovible et apte à flotter, maintenue entre les cadres (03) disposés selon un angle d'ouverture (Θ) du dispositif (01).

6. Dispositif transportable (01) selon la revendication 1,
**CARACTERISE PAR**
des surfaces de capture (04) avec des filets (24) tendus, des treillis (25) ou des tapis synthétiques (27) comportant des découpages (26).

7. Dispositif transportable (01) selon la revendication 1,
**CARACTERISE PAR**
des filets de collecte tendus (21) le long des côtés longitudinaux (17) des cadres (03) et/ou des filets de collecte convexes (22) le long des côtés transversaux extérieurs (14) des cadres (03).

8. Dispositif transportable (01) selon la revendication 1,
**CARACTERISE PAR**
des modules de garniture (20) sur les surfaces de capture (04), déplaçables et adaptés aux animaux marins invertébrés vivant au fond de l'eau (02).

9. Dispositif transportable (01) selon la revendication 8,
**CARACTERISE PAR**
des modules de garniture (20) constitués de deux moitiés de tube (30) reliées entre elles par leurs sommets (31).

10. Dispositif transportable (01) selon la revendication 1,
**CARACTERISE PAR**
des éléments de construction tubulaires (15) avec des éléments massiques (35) et/ou des ouvertures de compensation (29) permettant à l'air ou à l'eau de s'échapper.

11. Dispositif transportable (01) selon la revendication 1,
**CARACTERISE PAR**
des éléments de construction tubulaires (15) avec des ouvertures latérales (34) débouchant sur les surfaces de capture (04).

12. Dispositif transportable (01) selon la revendication 11,
**CARACTERISE PAR**
des ouvertures latérales (34) d'une longueur de section et des parois de réparation (35) entre les sections.

13. Dispositif transportable (01) selon la revendication 1,
**CARACTERISE PAR**
un dispositif de halage et de filage (16) avec un flotteur (19) proche du fond, sur lequel tous les câbles (18) sont rassemblés.

14. Dispositif transportable (01) selon la revendication 1,
**CARACTERISE PAR**
une fixation sur une pendille, avec un ancrage au sol et une bouée de surface ou une construction sous-marine.

15. Utilisation du dispositif transportable (01) selon la revendication 1, pour l'élevage et la récolte de crabes benthiques à proximité immédiate de tours (48) d'éoliennes dans des zones offshore.
